# FASCICULE DE BREVET EUROPEEN

(11) **EP 1 157 766 B1**
(45) Date de publication et mention de la délivrance du brevet: **29.01.2003**
(21) Numéro de dépôt: 00810450.7
(22) Date de dépôt: 23.05.2000
(51) Int. Cl.: B23B 13/08

(54) **Embarreur**
Stangenzuführvorrichtung
Bar feeder

(43) Date de publication de la demande: 28.11.2001
(73) Titulaire: LNS S.A., 2534 Orvin (CH)
(72) Inventeur: Scemama, Philippe, 2534 Orvin (CH)
(74) Mandataire: BOVARD AG - Patentanwälte

(56) Documents cités:
- EP-A- 0 188 849
- EP-A- 0 559 094

## Description

L'invention se rapporte à un appareil de chargement séquentiel, au moyen d'un poussoir, de barres dans une partie rotative d'une machine d'usinage comprenant les caractéristiques du préambule de la revendication 1 (voir EP-A-559 094 ou EP-A-188 849).

Les appareils de chargement de ce type sont bien connus sous le nom de "ravitailleur" et servent au ravitaillement de machines d'usinage par enlèvement de copeaux quant à elles dites tours d'usinage.

Par le terme poussoir, on désigne la partie active de l'appareil de chargement séquentiel, c'est-à-dire un corps qui, de diamètre déterminé, d'une part, présente une face extrême destinée à s'appuyer contre l'une des extrémités de la barre à pousser et, d'autre part, reçoit l'action d'un élément moteur de déplacement en translation, selon un axe approximativement aligné avec celui de la partie rotative.

L'invention se rapporte particulièrement à un appareil de chargement séquentiel de barres dans une partie rotative de machine, cet appareil étant de type comprenant un dispositif d'alignement sur l'axe de rotation de la partie rotative, de l'axe longitudinal d'au moins une partie de la barre qui est située immédiatement en amont de cette partie rotative.

Dans ces machines, la partie rotative qui reçoit la barre est classiquement dénommée "broche".

Ces dispositifs d'alignement sont destinés à assurer et/ou parfaire l'alignement avec l'axe de la broche, de l'axe longitudinal de la partie de la barre qui est engagée dans cette broche.

De cette manière, en général, les vibrations engendrées par le défaut de rectitude des barres ne se propagent pas dans la broche de la machine d'usinage et les défauts d'usinages qui résultaient de ces vibrations peuvent donc être évités.

En effet, les tours d'usinage permettent la réalisation séquentielle de pièces de révolution dont la dimension longitudinale correspond à une fraction de la longueur d'une barre de section transversale compatible avec celle des pièces à réaliser.

Précisément, chaque pièce est réalisée par usinage d'au moins une partie de l'extrémité d'une barre qui est engagée dans la broche, puis découpe de cette barre, notamment par tronçonnage, afin d'isoler la fraction longitudinale devant constituer la pièce.

Après chaque usinage, la barre est, sous l'effet du poussoir de l'appareil de chargement, translatée dans la broche pour permettre la réalisation d'une nouvelle pièce, et ce, jusqu'à ce que la barre soit épuisée.

Après quoi, une nouvelle barre est chargée dans la broche et le cycle d'usinage peut recommencer.

Classiquement un dispositif d'alignement comprend deux mâchoires qui, présentant des portées à même de définir un appui cylindrique autour d'une partie de barre, c'est-à-dire sur une fraction de la longueur de cette dernière, sont supportées par un mécanisme permettant des déplacements antagonistes de ces mâchoires, c'est-à-dire des déplacements induisant l'écartement ou le rapprochement desdites mâchoires.

Le mécanisme de déplacement est relié à un support massif, telle la structure de l'appareil de chargement séquentiel.

Le mécanisme de déplacement des mâchoires permet d'ajuster la position desdites mâchoires en fonction du diamètre de la barre destinée à être utilisée dans la machine d'usinage.

Dans les dispositifs d'alignement qui sont connus de la demanderesse, le mécanisme de déplacement des mâchoires est réglé à la main, c'est-à-dire qu'une personne doit intervenir pour ajuster la position des mâchoires en fonction du diamètre de la barre utilisée dans la machine d'usinage située en aval du dispositif.

Théoriquement, cela ne pose pas de problème mais, en pratique des oublis sont parfois constatés, lesquels engendrent des inconvénients, notamment sous la forme d'arrêts de production.

Précisément, en cas d'augmentation du diamètre de la barre, le chargement de la machine de décolletage est interdit car l'extrémité de la barre de diamètre accru rencontre les mâchoires sans pouvoir les traverser et ne peut donc être chargée dans la machine.

De même, en cas de chargement d'une barre de diamètre inférieur à celui dudit poussoir, le chargement complet de la barre dans la machine de décolletage est interdit car l'extrémité du poussoir rencontre les mâchoires sans pouvoir les traverser et ne peut donc pousser complètement la barre dans la machine.

Egalement, en cas de réduction du diamètre de barre, lors d'un changement de type de pièces à fabriquer en série, la machine de décolletage est privée de l'action du dispositif d'alignement car la barre de diamètre réduit peut être chargée dans la machine sans coopérer avec les mâchoires.

Un résultat que l'invention vise à obtenir est un appareil de chargement équipé d'un dispositif d'alignement qui permet de remédier à l'oubli de réglage de l'appareil d'alignement.

Un autre résultat que l'invention vise à obtenir est un appareil de chargement équipé d'un dispositif d'alignement qui permet de traiter l'apparition de vibrations dans la barre chargée dans la broche de la machine.

A cet effet, l'invention a pour objet un appareil de chargement séquentiel comprenant les caractéristiques du préambule de la revendication 1, lequel appareil étant notamment caractérisé en ce que le mécanisme de déplacement comprend :
- un organe moteur,
- un dispositif de commande de cet organe moteur, et ce, en fonction d'au moins l'un des paramètres que sont :
   . le diamètre de la barre à charger dans la machine d'usinage ,
   . le diamètre du poussoir dans une partie susceptible d'être engagée entre les mâchoires,
   . le dépassement d'un seuil prédéterminé de vibrations dans la barre.

L'invention sera bien comprise à la lecture de la description ci-après faite à titre d'exemple non limitatif en regard du dessin ci-annexé qui représente de manière fortement schématisée :

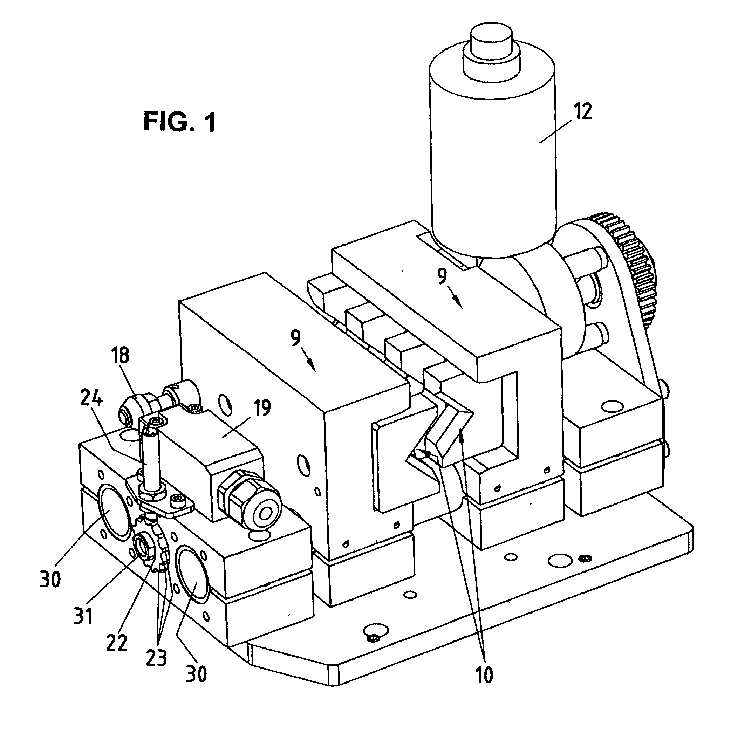

Figure 1 : une vue en perspective d'une partie d'un appareil de chargement séquentiel selon l'invention,
Figure 2 : une vue d'ensemble d'un appareil de chargement séquentiel selon l'invention et d'une machine d'usinage équipée de cet appareil,

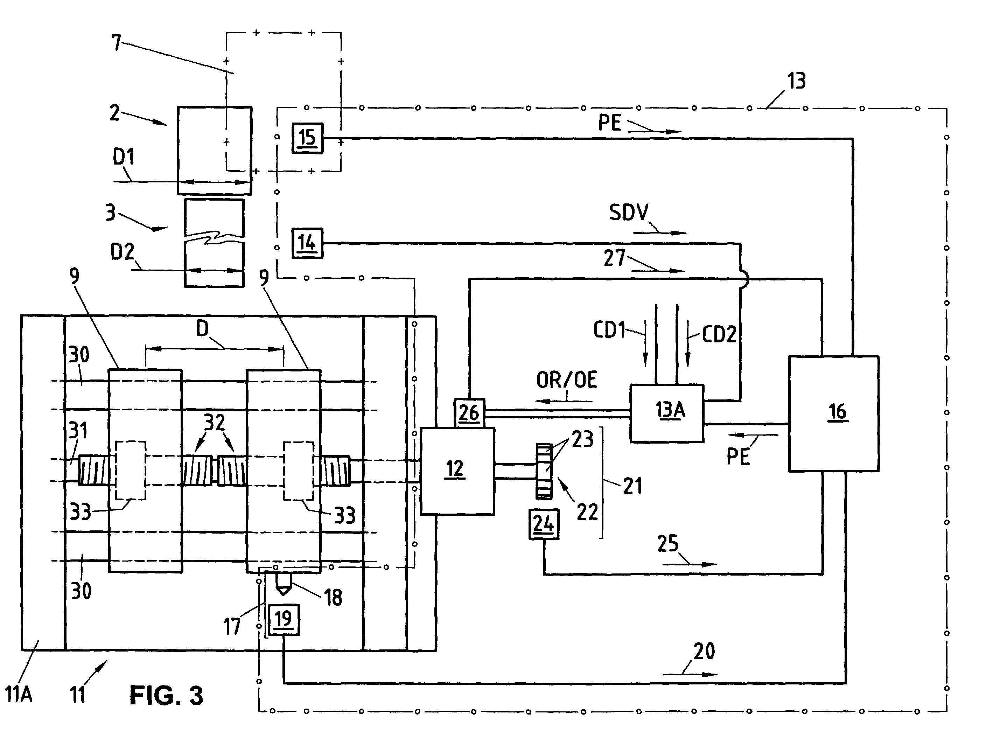

Figure 3 : une vue d'ensemble et détaillée d'un appareil de chargement séquentiel selon l'invention,

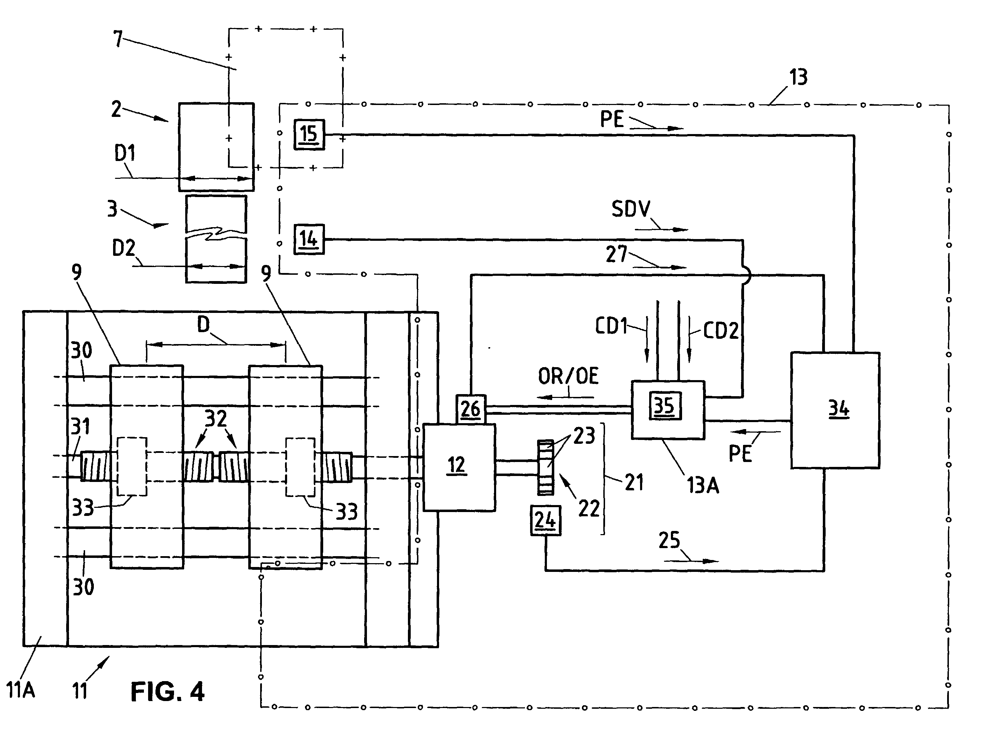

Figure 4 : une vue d'ensemble d'une variante de réalisation de partie fonctionnel de l'appareil de la figure 3.

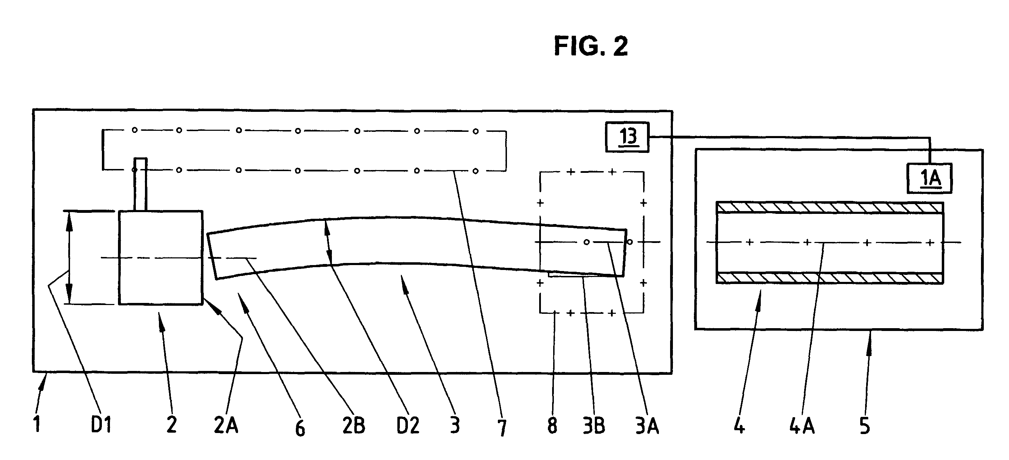

En se reportant aux dessins (figure 2), on voit un appareil de chargement séquentiel 1, notamment au moyen d'un poussoir 2, de barres 3 dans une partie rotative 4, telle une broche, d'une machine d'usinage 5, tel un tour d'usinage.

Par le terme poussoir, on désigne la partie active 2 de l'appareil de chargement séquentiel 1, c'est-à-dire un corps 2 sensiblement cylindrique de révolution qui, de diamètre D1 déterminé, d'une part, présente une face extrême 2A destinée à s'appuyer contre l'une 6, dite arrière, des extrémités de la barre 3 à pousser et, d'autre part, reçoit l'action d'un élément moteur 7 de déplacement en translation selon un axe 2B aligné avec celui 4A de la partie rotative 4.

L'élément moteur 7 de déplacement en translation peut être de tout type connu.

L'appareil de chargement séquentiel 1 de barres 3 dans la partie rotative 4, dite broche, comprend un dispositif d'alignement 8 sur l'axe de rotation 4A de la partie rotative 4, de l'axe longitudinal 3A d'au moins une partie 3B de la barre 3 qui est située immédiatement en amont de cette partie rotative 4.

Bien que cela n'apparaisse pas de manière flagrante sur les dessins le dispositif d'alignement 8 permet d'assurer et/ou de parfaire l'alignement avec l'axe 4A de la broche 4, d'une partie substantielle de la barre qui est engagée dans cette broche.

De cette manière les vibrations engendrées par le défaut de rectitude des barres 3 (volontairement accentuée sur le dessin) ne se propagent pas dans la broche 4 de la machine d'usinage 5 et les défauts d'usinage qui résultaient de ces vibrations peuvent donc être évités.

Le dispositif d'alignement 8 comprend deux mâchoires 9 qui, présentant des portées 10, telles des portées en V, à même de définir un appui cylindrique autour d'une partie 38 de barre 3, c'est-à-dire sur une fraction de la longueur de cette dernière, sont supportées par un mécanisme 11, dit de déplacement, permettant des déplacements antagonistes de ces mâchoires 9, c'est-à-dire des déplacements induisant l'écartement ou le rapprochement desdites mâchoires.

Le mécanisme 11 de déplacement est relié à un support massif 11A, telle la structure de l'appareil 1 de chargement séquentiel.

Le mécanisme 11 de déplacement des mâchoires 9 permet d'ajuster la position desdites mâchoires 9 en fonction du diamètre de la barre 3 destinée à être utilisée dans la machine d'usinage 5.

De manière remarquable, le mécanisme 11 de déplacement comprend :
- un organe moteur 12,
- un dispositif 13 de commande de cet organe moteur 12, et ce, en fonction d'au moins l'un des paramètres D1, D2 que sont :
   . le diamètre D2 de la barre à charger dans la machine d'usinage 5,
   . le diamètre D1 du poussoir 2 dans une partie susceptible d'être engagée entre les mâchoires 9,
   . le dépassement d'un seuil prédéterminé de vibrations dans la barre 3.

Le respect de ces caractéristiques techniques permet, notamment, de garantir le chargement de la machine d'usinage 5, en cas d'augmentation du diamètre de barre 3, par exemple lors d'un changement de type de pièces à fabriquer en série.

En effet, l'extrémité de la barre 3 de diamètre accru ne rencontre plus les mâchoires 9 sans pouvoir les traverser et peut donc être chargée dans la machine 5.

Egalement, en cas de réduction du diamètre de barre 3, lors d'un changement de type de pièces à fabriquer en série, la machine d'usinage 5 n'est plus privée de l'action du dispositif 8 d'alignement car la barre 3 de diamètre réduit peut être chargée dans la machine 5 en coopérant avec les mâchoires 9 du fait de l'ajustement de leur position.

De manière également remarquable, le dispositif 13 de commande comprend donc quant à lui au moins un ensemble fonctionnel 13A, tel un calculateur 13A à même :
- de recevoir, au moins indirectement,
   . l'une des consignes CD1, CD2, SDV qui reflètent, (CD2) la valeur du diamètre D2 de la barre 2 à charger dans la machine d'usinage 5, (CD1) le diamètre D1 du poussoir 2 dans une partie susceptible d'être engagée entre ces mâchoires 9, (SDV) le signal de dépassement d'un seuil prédéterminé de vibrations dans la barre 3,
   . une information, tel un signal PE quant à la position effective des mâchoires 9, c'est-à-dire au diamètre D du corps cylindrique de révolution qui peut être inscrit entre ces mâchoires 9,
- d'exploiter ces paramètres pour produire au moins un ordre de commande OR/OE de l'organe moteur 12 et induire le déplacement (écartement et/ou rapprochement) des mâchoires 9 afin d'obtenir au moins l'une des fonctions que sont,
   . la réalisation, autour de la barre 3, d'un appui cylindrique de guidage en rotation,
   . la réalisation, autour de la barre 3, d'un appui cylindrique de serrage temporaire jusqu'à disparition du signal SDV de dépassement du seuil déterminé de vibration.

L'homme de métier est à même de déterminer la valeur du serrage temporaire.

Le serrage peut être matérialisé par une réduction du jeu de guidage en rotation.

De manière remarquable, le dispositif 13 de commande comprend un organe 14 de détection du dépassement d'un seuil déterminé de vibrations et d'élaboration d'un signal SDV révélant le dépassement de ce seuil.

Cet organe 14 de détection du dépassement d'un seuil déterminé de vibrations peut être de tout type connu et situé à tout endroit convenable.

De manière remarquable, le dispositif 13 de commande comprend un organe 15 de surveillance de la position du poussoir 2 par rapport aux mâchoires 9, de manière à, au moins, générer un ordre OE d'écartement des mâchoires 9 afin d'induire le déplacement de ces mâchoires 9 lorsque l'extrémité de ce poussoir 2 doit être introduite entre lesdites mâchoires 9, notamment, lorsqu'une adaptation de diamètre est requise.

Avantageusement, l'organe 15 de surveillance de la position du poussoir 2 par rapport aux mâchoires 9 est disposé dans l'appareil de chargement 1 et, par exemple associé à l'élément moteur 7 de déplacement en translation du poussoir.

En cas de chargement d'une barre 3 de diamètre inférieur à celui dudit poussoir 2, le chargement complet de la barre 2 dans la machine 5 d'usinage n'est plus interdit du fait que l'extrémité du poussoir 2 ne rencontre plus frontalement les mâchoires 9.

Le poussoir 2 peut donc traverser le dispositif d'alignement 8 et, dans la limite où son déplacement le permet, pousser complètement la barre 2 dans la machine 5.

De manière remarquable, le dispositif 13 de commande comprend un ensemble fonctionnel 16, 35 de détermination au moins indirecte de la valeur du diamètre D inscrit dans les mâchoires 9, c'est-à-dire de la valeur du diamètre d'un corps cylindrique de révolution qui pourrait être placé entre les mâchoires 9 compte tenu de leur position relative.

De manière remarquable, le dispositif 13 de commande comprend :
- un ensemble fonctionnel 17, dit premier, constitué d'un témoin de position 18 de référence et d'un capteur 19 de détection de ce témoin 18 et de production d'un signal de détection 20 de la position de référence, lesquels sont disposés pour être mobiles l'un par rapport à l'autre lors du déplacement des mâchoires 9 et ne coopérer que dans une position choisie de ces mâchoires 9 correspondant à un diamètre inscrit D déterminé,
- un ensemble fonctionnel 21, dit deuxième, constitué d'un organe 22 portant une pluralité de témoins 23 de positions qui sont disposés selon un pas P1 déterminé et un capteur 24 de détection d'un de ces témoins 23 et de production d'un signal 25 de détection de chaque témoin 23, l'organe 22 portant les témoins 23 et le capteur 24 de détection étant disposés pour être mobiles l'un par rapport à l'autre lors du déplacement des mâchoires 9 et, de manière telle que le pas P1 entre les témoins 23 corresponde à une valeur connue de déplacement des mâchoires 9 et que, par cela, l'émission de deux signaux consécutifs 25 par le capteur 24 indique le déplacement des mâchoires 9 d'une valeur déterminée,
- un ensemble fonctionnel 26, dit troisième, de production d'un signal 27 dépendant du sens de déplacement des mâchoires 9,
- un ensemble fonctionnel 16, dit quatrième, tel un calculateur, pour l'exploitation du signal 20 de détection de la position de référence ainsi que des signaux consécutifs 25 révélant le déplacement des mâchoires 9 d'une valeur déterminée et du signal 27 indiquant le sens de déplacement de ces mâchoires 9, et ce, de manière à élaborer un signal PE reflétant la position effective des mâchoires 9 et donc la valeur du diamètre D inscrit entre les mâchoires 9.

Cet ensemble fonctionnel 16 de détermination, au moins indirecte, de la valeur du diamètre D inscrit dans les mâchoires 9, permet au dispositif de commande de commander le déplacement des mâchoires 9 pour adapter leur position en fonction du diamètre des barres 3 placées dans l'appareil 1 de chargement séquentiel.

Ainsi, après qu'un opérateur ait introduit dans le dispositif 13 de commande une consigne CD1 reflétant la valeur du diamètre des barres 3 et, une consigne CD2 reflétant le diamètre du poussoir 2, le dispositif 13 de commande peut gérer automatiquement le déplacement des mâchoires 9, car il peut être renseigné sur la position effective de ces mâchoires 9.

Avantageusement, le dispositif 13 de commande du mécanisme 11 de déplacement des mâchoires 9, est relié à un dispositif 1A de commande de la machine d'usinage 5.

Le mécanisme 11 de déplacement des mâchoires 9 met en oeuvre :
- des glissières 30 de guidage en translation qui, au moins indirectement supportées par un élément massif structurel 11A, tel le châssis de l'appareil 1 de chargement, coopèrent avec des portées quant à elles associées aux mâchoires 9 pour leur guidage en translation,
- un arbre 31 qui, guidé en rotation et immobilisé en translation relativement à l'élément massif, présente deux zones longitudinales filetées 32, de pas déterminé mais contraires,
- deux écrous 33 chacun engagé sur l'une de ces zones filetées 32 et associé à l'une des mâchoires 9, de manière telle que la rotation de la vis d'amplitude déterminée induise un déplacement des mâchoires 9 de valeur proportionnelle déterminée.

De manière remarquable, le mécanisme 11 de déplacement des mâchoires 9 comprend :
- un organe moteur 12 de commande de la rotation de l'arbre fileté 31,
- une roue 22 qui, au moins indirectement liée en rotation avec l'arbre fileté 31, porte une pluralité de témoins 23 de positions disposés selon un pas circonférentiel P1 déterminé,
- constituant l'ensemble fonctionnel 17, dit premier, une butée 18 constituant le témoin de position de référence et un capteur 19 de détection de cette butée 18 et de production d'un signal 20 de détection de la position de référence, l'un de ces éléments 18, 19 étant associé à l'une des mâchoires 9 et l'autre étant fixe de manière à ne coopérer que dans une position choisie des mâchoires 9 correspondant à un diamètre inscrit déterminé D,
- constituant l'ensemble fonctionnel 21, dit deuxième, un capteur 24 de détection d'un de ces témoins 23 et de production d'un signal 24 de détection de chaque témoin 23, de manière telle que le pas circonférentiel P1 entre deux témoins consécutifs 23 corresponde à une fraction angulaire déterminée de la rotation de l'arbre 31 et donc à une valeur connue de déplacement des mâchoires 9.

Le capteur 19 de l'ensemble fonctionnel 17, dit premier, consiste avantageusement en un contacteur électrique 19 et la butée 18 en une came 18 d'actionnement de ce contacteur 19.

De manière avantageuse, d'une part, la roue 22 porte une pluralité de dents périphériques 23 qui, réalisées en métal magnétique, constituent chacune un témoin 23 et, d'autre part, le capteur 24 de détection consiste en un capteur de type à induction.

Avantageusement, la roue 22 est entièrement réalisée en métal magnétique.

Ce type de construction de l'ensemble fonctionnel 21, dit deuxième, est avantageux car il est particulièrement robuste.

Avantageusement, l'organe moteur 12 de commande de la rotation de l'arbre 31 fileté est un moteur électrique 12 à courant continu et le troisième ensemble fonctionnel 20, de production d'un signal 27 dépendant du sens de déplacement des mâchoires 9 exploite la polarité d'un courant d'alimentation aux bornes d'alimentation électrique de ce moteur 12, pour former un signal 27 reflétant le sens de commande du moteur 12 et donc le sens de déplacement des mâchoires 9.

Evidemment, le dispositif d'alignement 8 est réglé de manière telle que les mâchoires assurent, en temps normal, le guidage recherché en freinant le moins possible la rotation des barres.

Dans une autre forme remarquable de réalisation, le dispositif 13 de commande comprend :
- un ensemble fonctionnel 21, dit deuxième, constitué d'un organe 22 portant une pluralité de témoins 23 de positions qui sont disposés selon un pas P1 déterminé et un capteur 24 de détection d'un de ces témoins 23 et de production d'un signal 25 de détection de chaque témoin 23, l'organe 22 portant les témoins 23 et le capteur 24 de détection étant disposés pour être mobiles l'un par rapport à l'autre lors du déplacement des mâchoires 9 et, de manière telle que le pas P1 entre les témoins 23 corresponde à une valeur connue de déplacement des mâchoires 9 et que, par cela, l'émission de deux signaux consécutifs 25 par le capteur 24 indique le déplacement des mâchoires 9 d'une valeur déterminée,
- un ensemble fonctionnel 26, dit troisième, de production d'un signal 27 dépendant du sens de déplacement des mâchoires 9,
- un ensemble fonctionnel 34, dit cinquième, tel un calculateur, qui commande les fonctions suivantes,
   . ouverture des mâchoires 9 en position maximale, préalablement au déplacement d'une barre 3 vers les mâchoires 9,
   . déplacement de la barre 3 entre les mâchoires 9,
   . fermeture des mâchoires 9 jusqu'à les amener en contact avec la barre 3, sans provoquer de serrage notable,
   . ouverture des mâchoires pour aménager un jeu de fonctionnement prédéterminé,
- un ensemble fonctionnel 35, dit sixième, tel un calculateur, pour lors d'un déplacement des mâchoires 9,
   . exploiter,
      .. l'une des consignes CD1, CD2 qui reflètent, (CD2) la valeur du diamètre D2 de la barre 2 à charger dans la machine d'usinage 5, (CD1) le diamètre D1 du poussoir 2 dans une partie susceptible d'être engagée entre ces mâchoires 9,
      .. les signaux consécutifs 25 révélant le déplacement des mâchoires 9 d'une valeur déterminée et du signal 27 indiquant le sens de déplacement de ces mâchoires 9,
   . élaborer un signal PE quant à la position effective des mâchoires 9, c'est à dire au diamètre D du corps cylindrique de révolution inscrit entre ces mâchoires 9, en fonction de la valeur de consigne CD2 reflétant le dit diamètre et de la prise de contact effectif des mâchoires avec la barre 3.

Par exemple l'ensemble fonctionnel 34, dit cinquième, qui commande, notamment, la fonction de fermeture des mâchoires 9 jusqu'à les amener en contact avec la barre 3, sans provoquer de serrage notable comprend un élément de surveillance du courant d'alimentation du moteur 12, de manière à détecter l'augmentation de couple qui résulte du contact des mâchoires avec la barre et à stopper l'alimentation dudit moteur 12.

## Revendications

1. Appareil (1) de chargement séquentiel, au moyen d'un poussoir (2), de barres (3) dans une broche rotative (4) de machine d'usinage (5), cet appareil 1 de chargement comprenant un dispositif (8) d'alignement d'une extrémité (3B) de chaque barre (3) chargée, sur l'axe (4A) de la broche (4) de la machine d'usinage (5), ledit dispositif (8) d'alignement comprenant lui-même des mâchoires (9) qui, présentant des portées à même de définir un appui cylindrique autour de la barre (3), sont supportées par un mécanisme (11) permettant leurs déplacements antagonistes, cet appareil (1) étant **caractérisé en ce que** le mécanisme (11) de déplacement des mâchoires (9) comprend :
- un organe moteur (12),
- un dispositif (13) de commande de cet organe moteur (12), et ce, en fonction d'au moins l'un des paramètres (D1, D2) que sont :
. le diamètre (D2) de la barre à charger dans la machine d'usinage (5),
. le diamètre (D1) du poussoir (2) dans une partie susceptible d'être engagée entre les mâchoires (9),
. le dépassement d'un seuil prédéterminé de vibrations dans la barre 3.

2. Appareil selon la revendication 1, **caractérisé en ce qu'**il comporte un dispositif (13) de commande comprenant quant à lui au moins un ensemble fonctionnel (13A), tel un calculateur (13A) à même :
- de recevoir, au moins indirectement,
. l'une des consignes (CD1, CD2, SDV) qui reflètent, (CD2) la valeur du diamètre (D2) de la barre (2) à charger dans la machine d'usinage (5), (CD1) le diamètre (D1) du poussoir (2) dans une partie susceptible d'être engagée entre ces mâchoires (9), (SDV) le signal de dépassement d'un seuil prédéterminé de vibrations dans la barre (3),
. une information, tel un signal (PE) quant à la position effective des mâchoires (9), c'est-à-dire au diamètre (D) du corps cylindrique de révolution qui peut être inscrit entre ces mâchoires (9),
- d'exploiter ces paramètres pour produire au moins un ordre de commande (OR/OE) de l'organe moteur (12) et induire le déplacement des mâchoires (9) afin d'obtenir au moins l'une des fonctions que sont,
. la réalisation, autour de la barre (3), d'un appui cylindrique de guidage en rotation,
. la réalisation, autour de la barre (3), d'un appui cylindrique de serrage temporaire jusqu'à disparition du signal (SDV) de dépassement du seuil déterminé de vibration.

3. Appareil selon la revendication 1 ou 2, **caractérisé en ce qu'**il comporte un dispositif (13) de commande comprenant un organe (14) de détection du dépassement d'un seuil déterminé de vibrations et d'élaboration d'un signal (SDV) révélant le dépassement de ce seuil.

4. Appareil selon l'une quelconque des revendications 1 à 3 **caractérisé en ce qu'**il comporte un dispositif (13) de commande comprenant un organe (15) de surveillance de la position du poussoir (2) par rapport aux mâchoires (9), de manière à, au moins, générer un ordre (OE) d'écartement des mâchoires (9) afin d'induire le déplacement de ces mâchoires (9) lorsque l'extrémité de ce poussoir (2) doit être introduite entre lesdites mâchoires (9), notamment, lorsqu'une adaptation de diamètre est requise.

5. Appareil selon l'une quelconque des revendications 1 à 4, **caractérisé en ce qu'**il comporte un dispositif (13) de commande comprenant un ensemble fonctionnel (16, 35) de détermination au moins indirecte de la valeur du diamètre (D) inscrit dans les mâchoires (9), c'est-à-dire de la valeur du diamètre d'un corps cylindrique de révolution qui pourrait être placé entre les mâchoires (9) compte tenu de leur position relative.

6. Appareil selon la revendication 5, **caractérisé en ce qu'**il comporte un dispositif (13) de commande comprenant :
- un ensemble fonctionnel (17), dit premier, constitué d'un témoin de position (18) de référence et d'un capteur (19) de détection de ce témoin (18) et de production d'un signal de détection (20) de la position de référence, lesquels sont disposés pour être mobiles l'un par rapport à l'autre lors du déplacement des mâchoires (9) et ne coopérer que dans une position choisie de ces mâchoires (9) correspondant à un diamètre inscrit (D) déterminé,
- un ensemble fonctionnel (21), dit deuxième, constitué d'un organe (22) portant une pluralité de témoins (23) de positions qui sont disposés selon un pas (P1) déterminé et un capteur (24) de détection d'un de ces témoins (23) et de production d'un signal (25) de détection de chaque témoin (23), l'organe (22) portant les témoins (23) et le capteur (24) de détection étant disposés pour être mobiles l'un par rapport à l'autre lors du déplacement des mâchoires (9) et, de manière telle que le pas (P1) entre les témoins (23) corresponde à une valeur connue de déplacement des mâchoires (9) et que, par cela, l'émission de deux signaux consécutifs (25) par le capteur (24) indique le déplacement des mâchoires (9) d'une valeur déterminée,
- un ensemble fonctionnel (26), dit troisième, de production d'un signal (27) dépendant du sens de déplacement des mâchoires (9),
- un ensemble fonctionnel (16), dit quatrième, tel un calculateur, pour l'exploitation du signal (20) de détection de la position de référence ainsi que des signaux consécutifs (25) révélant le déplacement des mâchoires (9) d'une valeur déterminée et du signal (27) indiquant le sens de déplacement de ces mâchoires (9), et ce, de manière à élaborer un signal (PE) reflétant la position effective des mâchoires (9) et donc la valeur du diamètre (D) inscrit entre les mâchoires (9).

7. Appareil selon la revendication 5, **caractérisé en ce qu'**il comporte un dispositif (13) de commande comprenant :
- un ensemble fonctionnel (21), dit deuxième, constitué d'un organe (22) portant une pluralité de témoins (23) de positions qui sont disposés selon un pas (P1) déterminé et un capteur (24) de détection d'un de ces témoins (23) et de production d'un signal (25) de détection de chaque témoin (23), l'organe (22) portant les témoins (23) et le capteur (24) de détection étant disposés pour être mobiles l'un par rapport à l'autre lors du déplacement des mâchoires (9) et, de manière telle que le pas (P1) entre les témoins (23) corresponde à une valeur connue de déplacement des mâchoires (9) et que, par cela, l'émission de deux signaux consécutifs (25) par le capteur (24) indique le déplacement des mâchoires (9) d'une valeur déterminée,
- un ensemble fonctionnel (26), dit troisième, de production d'un signal (27) dépendant du sens de déplacement des mâchoires (9),
- un ensemble fonctionnel (34), dit cinquième, tel un calculateur, qui commande les fonctions suivantes,
. ouverture des mâchoires (9) en position maximale, préalablement au déplacement d'une barre (3) vers les mâchoires (9),
. déplacement de la barre (3) entre les mâchoires (9),
. fermeture des mâchoires (9) jusqu'à les amener en contact avec la barre (3), sans provoquer de serrage notable,
. ouverture des mâchoires (9) pour aménager un jeu de fonctionnement prédéterminé,
- un ensemble fonctionnel (35), dit sixième, tel un calculateur, pour lors d'un déplacement des mâchoires (9),
. exploiter,
.. l'une des consignes (CD1, CD2) qui reflètent, (CD2) la valeur du diamètre (D2) de la barre (2) à charger dans la machine d'usinage (5), (CD1) le diamètre (D1) du poussoir (2) dans une partie susceptible d'être engagée entre ces mâchoires (9),
.. les signaux consécutifs (25) révélant le déplacement des mâchoires (9) d'une valeur déterminée et du signal (27) indiquant le sens de déplacement de ces mâchoires (9),
. élaborer un signal (PE) quant à la position effective des mâchoires (9), c'est-à-dire au diamètre (D) du corps cylindrique de révolution inscrit entre ces mâchoires (9), en fonction de la valeur de consigne (CD2) reflétant le dit diamètre et de la prise de contact effectif des mâchoires avec la barre (3).

8. Appareil selon la revendication 6 ou 7 et de type comprenant un mécanisme (11) de déplacement des mâchoires (9) qui met en oeuvre :
- un arbre (31) qui, guidé en rotation et immobilisé en translation relativement à un élément massif (11A), présente deux zones longitudinales filetées (32), de pas déterminé mais contraires,
- deux écrous (33) chacun engagé sur l'une de ces zones filetées (32) et associé à l'une des mâchoires (9), de manière telle que la rotation de la vis d'amplitude déterminée induise un déplacement des mâchoires (9) de valeur proportionnelle déterminée,
cet appareil de chargement étant **caractérisé en ce que** le mécanisme (11) de déplacement des mâchoires compend :
- un organe moteur (12) de commande de la rotation de l'arbre fileté (31),
- une roue (22) qui, au moins indirectement liée en rotation avec l'arbre fileté (31), porte une pluralité de témoins (23) de positions disposés selon un pas circonférentiel (P1) déterminé,
- constituant l'ensemble fonctionnel (17), dit premier, une butée (18) constituant le témoin de position de référence et un capteur (19) de détection de cette butée (18) et de production d'un signal (20) de détection de la position de référence, l'un de ces éléments (18, 19) étant associé à l'une des mâchoires (9) et l'autre étant fixe de manière à ne coopérer que dans une position choisie des mâchoires (9) correspondant à un diamètre inscrit déterminé (D),
- constituant l'ensemble fonctionnel (21), dit deuxième, un capteur (24) de détection d'un de ces témoins (23) et de production d'un signal (24) de détection de chaque témoin (23), de manière telle que le pas circonférentiel (P1) entre deux témoins consécutifs (23) corresponde à une fraction angulaire déterminée de la rotation de l'arbre (31) et donc à une valeur connue de déplacement des mâchoires (9).

9. Appareil selon l'une quelconque des revendications 1 à 8, **caractérisé en ce qu'**un organe moteur (12) de commande de la rotation de l'arbre (31) fileté, est un moteur électrique (12) à courant continu et le troisième ensemble fonctionnel (20), de production d'un signal (27) dépendant du sens de déplacement des mâchoires (9) exploite la polarité d'un courant d'alimentation aux bornes d'alimentation électrique de ce moteur (12), pour former un signal (27) reflétant le sens de commande du moteur (12) et donc le sens de déplacement des mâchoires (9).

10. Appareil selon la revendication 8, **caractérisé en ce que** sa roue (22), porte une pluralité de dents périphériques (23) qui, réalisées en métal magnétique, constituent chacune un témoin (23) et, d'autre part, le capteur (24) de détection consiste en un capteur de type à induction.

## Claims

1. Apparatus (1) for sequential loading, by means of a pusher (2), of bars (3) in a rotating spindle (4) of a machine tool (5), this loading apparatus (1) having a device (8) for alignment of an end (3B) of each loaded bar (3), on the axis (4A) of the spindle (4) of the machine tool (5), the said alignment device (8) itself having jaws (9) which, having bearing surfaces able to define a cylindrical support around the bar (3), are supported by a mechanism (11) allowing their counter-displacements, this apparatus (1) being **characterised in that** the mechanism (11) for displacement of the jaws (9) of the apparatus includes:
- a drive element (12),
- a device (13) for control of this drive element (12), and this as a function of at least one of the parameters (D1, D2) which are:
• the diameter (D2) of the bar to be loaded in the machine tool (5),
• the diameter (D1) of the pusher (2) in a part capable of being engaged in the jaws (9),
• the surpassing of a predetermined threshold for vibrations in the bar (3).

2. Apparatus according to claim 1, **characterised in that** it includes a control device (13) itself having at least one functional unit (13A),such as a calculator (13A), itself able:
- to receive, at least indirectly,
• one of the input data (CD1, CD2, SDV) which reflect (CD2) the value of the diameter (D2) of the bar (2) to be loaded in the machine tool (5), (CD1) the diameter (D1) of the pusher (2) in a part capable of being engaged between these jaws (9), (SDV) the signal of surpassing of a predetermined threshold for vibrations in the bar (3),
• a piece of information, such as a signal (PE) relating to the actual position of the jaws (9), i.e. to the diameter (D) of the cylindrical body in revolution that can be inscribed between these jaws (9),
- to make use of these parameters to produce at least a control sequence (OR/OF) for the drive element (12) and induce the displacement of the jaws (9) in order to obtain at least one of the capabilities which are:
• the creation of a cylindrical rotational guide support around the bar (3),
• the creation of a cylindrical temporary clamping support around the bar (3) until disappearance of the signal (SDV) of surpassing of the predetermined vibration threshold.

3. Apparatus according to claim 1 or 2, **characterised in that** it includes a control device (13) having an element (14) of detection of the surpassing of a predetermined vibration threshold and of production of a signal (SDV) relating to the surpassing of this threshold.

4. Apparatus according to any one of the claims 1 to 3, **characterised in that** it includes a control device (13) including an element (15) for monitoring the position of the pusher (2) with respect to the jaws (9) in such a way as to generate a command (OE) for spacing of the jaws (9) so as to induce a displacement of these jaws (9) when the end of this pusher (2) has to be introduced between the said jaws (9), in particular when an adaptation of diameter is required.

5. Apparatus according to any one of the claims 1 to 4, **characterised in that** it includes a control device (13) including a functional unit (16, 35) for determining at least indirectly the value of the diameter (D) inscribed in the jaws (9), i.e. the value of the diameter of a cylindrical body in rotation which could be placed between the jaws (9) taking into account their relative position.

6. Apparatus according to claim 5, **characterised in that** it includes a control device (13) having:
- a functional unit (17), referred to as the first functional unit, made up of a position indicator (18) for reference and a sensor (19) for detection of this indicator (18) and for production of a signal (20) of detection of the reference position, said position indicator (18) and sensor (19) being disposed so as to be movable with respect to one another upon displacement of the jaws (9) and cooperating only in a selected position of these jaws (9) corresponding to a predetermined inscribed diameter (D),
- a functional unit (21), referred to as the second functional unit, made up of an element (22) bearing a plurality of position indicators (23) which are disposed at a predetermined pitch (P1) and a sensor (24) for detecting one of these indicators (23) and for production of a signal (25) of each indicator (23), the element (22) bearing the indicators (23) and the sensor (24) for detection being disposed so as to be movable with respect to one another upon displacement of the jaws (9) and such that the pitch (P1) between the indicators (23) corresponds to a known value for displacement of the jaws (9), and in so doing, to this end, the emitting of two consecutive signals (25) by the sensor (24) indicates the displacement of the jaws (9) by a predetermined value,
- a functional unit (26), referred to as the third functional unit, for producing a signal (27) dependent upon the direction of displacement of the jaws (9),
- a functional unit (16), referred to as the fourth functional unit, such as a calculator, for making use of the signal (20) of detection of the reference position as well as consecutive signals (25) relating to the displacement of the jaws (9) by a predetermined value and of the signal (27) indicating the direction of displacement of these jaws (9), and this in such a way as to produce a signal (PE) reflecting the actual position of the jaws (9) and thus the value of the diameter (D) inscribed between the jaws (9).

7. Apparatus according to claim 5, **characterised in that** it includes a control device (13) having:
- a functional unit (21), referred to as the second functional unit, made up of an element (22) bearing a plurality of position indicators (23) which are disposed at a predetermined pitch (P1) and a sensor (24) for detecting one of these indicators (23) and for producing a signal (25) for each indicator (23), the element (22) bearing the indicators (23) and the detection sensor (24), being disposed so as to be movable with respect to one another upon displacement of the jaws (9) and such that the pitch (P1) between the indicators (23) corresponds to a known value for displacement of the jaws (9), and in so doing, to this end, the emitting of two consecutive signals (25) by the sensor (24) indicates the displacement of the jaws (9) by a predetermined value,
- a functional unit (26), referred to as the third functional unit, for producing a signal (27) dependent upon the direction of displacement of the jaws (9),
- a functional unit (34), referred to as the fifth functional unit, which controls the following functions:
• opening of the jaws (9) into maximal position, prior to displacement of a bar (3) toward the jaws (9),
• placement of the bar (3) between the jaws (9),
• closing of the jaws (9) until they come into contact with the bar (3), without causing notable clamping,
• opening of the jaws (9) to make adjustment for a predetermined operational play,
- a functional unit (35), referred to as the sixth functional unit, such as a calculator, in order, upon displacement of the jaws (9), to:
• make use of:
•• one of the input data (CD1, CD2), (CD2) reflecting the value of the diameter (D2) of the bar (2) to be loaded into the machine tool (5), (CD2) reflecting the diameter (D1) of the pusher (2) in a part capable of being engaged between these jaws (9),
•• the consecutive signals (25) relating to the displacement of the jaws (9) by a predetermined value and of the signal (27) indicating the direction of displacement of these jaws (9),
• work out a signal (PE) relating to the actual position of the jaws (9), i.e. to the diameter (D) of the cylindrical body in rotation engaged between these jaws (9) as a function of the input data value (CD2) reflecting the said diameter and of the jaws' actual taking up contact with the bar (3).

8. Apparatus according to claim 6 or 7, of the type having a mechanism (11) for displacement of jaws (9) which brings into play:
- a shaft (31) which, guided in rotation and immobilized in translation relative to a support element (11A), has two longitudinal, threaded zones (32) of predetermined, but opposite, pitch,
- two nuts (33), each engaged on one of these threaded zones (32) and connected to one of the jaws (9) in such a way that a predetermined rotation of the screw of amplitude causes a displacement of the jaws (9) of predetermined proportional value,
this loading apparatus being **characterised in that** the mechanism (11) for displacement of the jaws comprises:
- a drive element (12) for control of the rotation of the threaded shaft (31),
- a wheel (22) which, at least indirectly connected in rotation to the threaded shaft (31), bears a plurality of position indicators (23) disposed at a predetemined circumferential pitch (P1),
- a functional unit (17), referred to as the first functional unit, a pin (18) constituting the reference position indicator and a sensor (19) for detecting this pin (18) and for producing a signal (20) of detection of the reference position, one of these elements (18, 19) being connected to one of the jaws (9) and the other being fixed in such a way as to cooperate only in a selected position of the jaws (9) corresponding to a predetermined inscribed diameter (D),
- constituting the functional unit (21), referred to as the second functional unit, a sensor (24) for detecting one of these indicators (23) and for producing a signal (24) of detection of each indicator (23) in such a way that the circumferential pitch (P1) between two consecutive indicators (23) corresponds to a predetermined angular value for the rotation of the shaft (31) and thus to a known value for displacement of the jaws (9).

9. Apparatus according to any one of the claims 1 to 8, **characterised in that** said drive element (12) for control of the rotation of the threaded shaft (31) is a direct current electric motor (12), and said third functional unit (26), for producing a signal (27) depending upon the direction of displacement of the jaws (9), makes use of the polarity of a feed current to electrical supply terminals of this motor (12) to form the said signal (27) reflecting the direction of control of the motor (12) and thus the direction of displacement of the jaws (9).

10. Apparatus according to claim 8, **characterised in that** its wheel (22) bears a plurality of peripheral teeth (23) which, made of magnetic material, each constitute an indicator (23), and moreover the sensor (24) is an inductive-type sensor.

## Patentansprüche

1. Apparat (1) zum sequentiellen Wechseln von Stangen (3) in einer rotierenden Spindel (4) einer Werkzeugmaschine (5) mittels eines Stössels (2), wobei dieser Wechselapparat (1) eine Vorrichtung (8) zum Ausrichten eines Endes (3B) jeder geladenen Stange (3) auf die Achse (4A) der Spindel (4) der Werkzeugmaschine (5) enthält, wobei die genannten Ausrichtvorrichtung (8) selbst Backen (9) enthält, die Träger aufweisen, die fähig sind, eine zylindrische Auflage um die Stange (3) zu definieren und die durch einen Mechanismus (11) gestützt sind, der ihre gegensinnige Verschiebungen erlaubt, wobei dieser Apparat (1) **dadurch gekennzeichnet ist, dass** der Mechanismus (11) zum Verschieben der Backen (9) enthält:
- ein Motor-Organ (12),
- eine Vorrichtung (13) zum Steuern dieses Motor-Organs (12), und dies in Funktion mindestens eines Parameters (D1, D2), welche sind:
. der Durchmesser (D2) der in die Werkzeugmaschine (5) zu ladenden Stange,
. der Durchmesser (D1) des Stössel (2) in einem zwischen den Backen (9) aufzunehmenden Teil,
. das Überschreiten eines vorbestimmten Schwellwertes von Vibrationen in der Stange (3).

2. Apparat nach Anspruch 1, **dadurch gekennzeichnet, dass** er eine Steuervorrichtung (13) enthält, die ihrerseits mindestens eine Funktionsbaugruppe (13A) wie einen Rechner (13A) enthält, der fähig ist:
- mindestens indirekt zu empfangen,
. eine der Anweisungen (CD1, CD2, SDV), welche (CD2) den Wert des Durchmessers (D2) der in die Werkzeugmaschine (5) zu ladenden Stange (2), (CD1) den Durchmesser (D1) des Stössels (2) in einem zwischen den Backen (9) aufzunehmenden Teil, (SDV) das Signal des Überschreitens eines vorbestimmten Schwellwertes von Vibrationen in der Stange (3) widerspiegeln,
. eine Information wie ein Signal (PE) betreffend die effektive Position der Backen (9), das heisst den Durchmesser (D) des zylindrischen Rotationskörpers, der zwischen die Backen (9) geschoben werden kann,
- diese Parameter zu erfassen, um mindestens eine Befehlsfolge (OR/OE) vom Motor-Organ (12) zu erzeugen und die Verschiebung der Backen (9) zu bewirken, um mindestens eine der Funktionen zu erhalten, die sind,
. die Ausführung einer zylindrischen Rotationsführungsauflage um die Stange (3),
. die Ausführung einer temporären zylindrischen Schliess-Auflage um die Stange (3), bis zum Verschwinden des Signals (SDV) des Überschreitens des bestimmten Vibrationsschwellwertes.

3. Apparat nach Anspruch 1 oder 2, **dadurch gekennzeichnet, dass** er eine Steuervorrichtung (13) enthält, enthaltend ein Organ (14) zur Detektion der Überschreitung eines bestimmten Vibrationsschwellwertes und zur Erzeugung eines Signal (SDV), das die Überschreitung dieses Schwellwertes angibt.

4. Apparat nach einem der Ansprüche 1 bis 3, **dadurch gekennzeichnet, dass** er eine Steuervorrichtung (13) enthält, enthaltend ein Organ (15) zur Überwachung der Position des Stössels (2) in Bezug auf die Backen (9), derart, dass mindestens ein Befehl (OE) zur Spreizung der Backen (9) erzeugt wird, um die Verschiebung dieser Backen (9) zu bewirken, wenn das Ende dieses Stössels (2) zwischen den genannten Backen (9) eingeführt werden muss, insbesondere wenn eine Anpassung des Durchmessers erforderlich ist.

5. Apparat nach einem der Ansprüche 1 bis 4, **dadurch gekennzeichnet, dass** er eine Steuervorrichtung (13) enthält, enthaltend eine Funktionsbaugruppe (16, 35) zur mindestens indirekten Bestimmung des Wertes des in die Backen (9) eingeführten Durchmessers (D), das heisst, des Wertes des Durchmessers eines zylindrischen Rotationskörpers, der unter Berücksichtigung ihrer relativen Position zwischen den Backen (9) platziert werden könnte.

6. Apparat nach Anspruch 5, **dadurch gekennzeichnet, dass** er eine Steuervorrichtung (13) enthält, enthaltend:
- eine erste Funktionsbaugruppe (17), zusammengesetzt aus einem Referenz-Positionsgeber (18) und einem Detektionsaufnehmer (19) dieses Gebers (18) zur Erzeugung eines Detektionssignals (20) der Referenzposition, welche so angeordnet sind, dass sie während der Verschiebung der Backen (9) in Bezug aufeinander beweglich sind und nur in einer gewählten Position der Backen (9) entsprechend einem bestimmten, eingeführten Durchmesser (D) zusammenarbeiten,
- eine zweite Funktionsbaugruppe (21), zusammengesetzt aus einem Organ (22), das eine Mehrzahl von Positionsgebern (23) trägt, die entsprechend einem bestimmten Schritt (P1) angeordnet sind und einem Detektionsaufnehmer (24) eines dieser Geber (23) und zur Erzeugung eines Detektionssignals (25) jedes Gebers (23), wobei das die Geber (23) tragende Organ (22) und der Detektionsaufnehmer (24) angeordnet ist, um während der Verschiebung der Backen (9) in Bezug aufeinander beweglich zu sein, und derart, dass die Schritte (P1) zwischen den Gebern (23) einem bekannten Wert der Verschiebung der Backen (9) entsprechen und dass dadurch die Aussendung von zwei aufeinander folgenden Signalen (25) durch den Aufnehmer (24) die Verschiebung der Backen (9) um einen bestimmten Wert angibt,
- eine dritte Funktionsbaugruppe (26) zur Erzeugung eines vom Sinn der Verschiebung der Backen (9) abhängigen Signals (27),
- eine vierte Funktionsbaugruppe (16) wie einen Rechner für die Auswertung des Detektionssignals (20) der Referenzposition wie auch der aufeinander folgenden Signale (25), welche die Verschiebung der Backen (9) um einen bestimmten Wert angeben und des Signals (27), das den Sinn der Verschiebung dieser Backen (9) angibt, und dies derart, um ein Signal (PE) zu erarbeiten, das die effektive Position der Backen (9) und folglich den Wert des Durchmessers (D) zwischen den Backen (9) widerspiegelt.

7. Apparat nach Anspruch 5, **dadurch gekennzeichnet, dass** er eine Steuervorrichtung (13) enthält, enthaltend:
- eine zweite Funktionsbaugruppe (21), zusammengesetzt aus einem Organ (22), das eine Mehrzahl von Positionsgebem (23) trägt, die entsprechend einem bestimmten Schritt (P1) angeordnet sind und einem Detektionsaufnehmer (24) eines dieser Geber (23) und zur Erzeugung eines Detektionssignals (25) jedes Gebers (23), wobei das die Geber (23) tragende Organ (22) und der Detektionsaufnehmer (24) angeordnet sind, um während der Verschiebung der Backen (9) in Bezug aufeinander beweglich zu sein und derart, dass der Schritt (P1) zwischen den Gebern (23) einem bekannten Wert der Verschiebung der Backen (9) entspricht und dass dadurch die Aussendung von zwei aufeinander folgenden Signalen (25) durch den Aufnehmer (24) die Verschiebung der Backen (9) um einen bestimmten Wert angibt,
- eine dritte Funktionsbaugruppe (26) zur Erzeugung eines vom Sinn der Verschiebung der Backen (9) abhängigen Signals (27),
- eine fünfte Funktionsbaugruppe (34) wie einen Rechner, welche die folgenden Funktionen steuert,
. Öffnung der Backen (9) in die maximale Position, vorgängig zur Verschiebung einer Stange (3) gegen die Backen (9),
. Verschiebung der Stange (3) zwischen die Backen (9),
. Schliessen der Backen (9), bis sie in Kontakt mit der Stange (3) geführt werden, ohne ein merkliches Klemmen hervorzurufen,
. Öffnen der Backen (9) um ein vorbestimmtes Funktionsspiel herbeizuführen,
- eine sechste Funktionsbaugruppe (35) wie einen Rechner, um während einer Verschiebung der Backen (9),
. auszuwerten,
.. eine der Anweisungen (CD1, CD2), die (CD2) den Wert des Durchmessers (D2) der in die Werkzeugmaschine (5) zu ladenden Stange (2), (CD1) den Durchmesser (D1) des Stössels (2) in einem zur Aufnahme zwischen den Backen (9) bestimmten Teil (9) widerspiegeln,
.. die aufeinander folgenden Signale (25), welche die Verschiebung der Backen (9) um einen bestimmten Wert angeben und des Signals (27), welches den Sinn der Verschiebung dieser Backen (9) angibt,
. ein Signal (PE) zu erarbeiten betreffend die effektive Position der Backen (9), das heisst den Durchmesser (D) des zwischen diesen Backen (9) eingeführten zylindrischen Rotationskörpers, in Funktion des Anweisungswertes (CD2), der den genannten Durchmesser widerspiegelt und der effektiven Kontaktnahme der Backen mit der Stange (3).

8. Apparat nach Anspruch 6 oder 7 und vom Typ enthaltend einen Verschiebemechanismus (11) für die Backen (9), der in Betrieb setzt:
- eine Spindel (31), die rotierend geführt und translatorisch gegenüber einem massiven Element (11A) unverschiebbar ist und zwei längliche Gewindezonen (32) mit bestimmter, aber gegensinniger Steigung aufweist,
- zwei Muttern (33), die beide mit einer dieser Gewindezonen (32) im Eingriff stehen und mit einer der Backen (9) verbunden sind, derart, dass die Rotation der Schraube um einen bestimmten Betrag eine Verschiebung der Backen (9) um einen bestimmten proportionalen Wert bewirkt,
wobei dieser Wechselapparat **dadurch gekennzeichnet ist, dass** der Mechanismus (11) für die Verschiebung der Backen enthält:
- ein Motor-Organ (12) für die Steuerung der Schraubenspindel (31),
- ein Rad (22), das zumindest indirekt mit der Schraubenspindel (31) rotationsverbunden ist und eine Mehrzahl von Positionsgebern (23) trägt, die entsprechend einem bestimmten Umfangsschritt (P1) angeordnet sind,
- bildend die erste Funktionsbaugruppe (17), einen Anschlag (18) bildend den Referenz-Positionsgeber und einen Detektionsaufnehmer (19) dieses Anschlags (18) und zur Erzeugung eines Detektionssignals (20) der Referenzposition, wobei eines dieser Elemente (18, 19) einer der Backen (9) zugeordnet ist und das andere derart fest ist, dass sie nur in einer gewählten Position der Backen (9) zusammenarbeiten, die einem bestimmten eingeführten Durchmesser (D) entspricht,
- bildend die zweite Funktionsbaugruppe (21), einen Detektionsaufnehmer (24) eines dieser Geber (23) und zur Erzeugung eines Detektionssignals (24) jedes Gebers (23), derart, dass die Umfangsschritte (P1) zwischen zwei aufeinander folgenden Gebern (23) einem bestimmten Winkel-Bruchteil der Rotation der Spindel (31) und folglich einem bekannten Wert der Verschiebung der Backen (9) entsprechen.

9. Apparat nach einem der Ansprüche 1 bis 8, **dadurch gekennzeichnet, dass** ein Motor-Organ (12) zur Steuerung der Rotation der Schraubenspindel (31) ein Gleichstrommotor (12) ist und die dritte Funktionsbaugruppe (20) zur Erzeugung eines vom Sinn der Verschiebung der Backen (9) abhängigen Signals (27) die Polarität eines Speisestroms an den elektrischen Speiseklemmen dieses Motors (12) auswertet, um ein Signal (27) zu bilden, das den Sinn der Steuerung des Motors (12) und folglich den Verschiebungssinn der Backen (9) widerspiegelt.

10. Apparat nach Anspruch 8, **dadurch gekennzeichnet, dass** sein Rad (22) eine Mehrzahl von peripheren Zähnen (23) trägt, die aus einem magnetischen Metall ausgeführt sind und von denen jeder einen Geber (23) bildet und dass andererseits der Detektionsaufnehmer (24) aus einem Aufnehmer des Typs Induktion besteht.
